Europäisches Patentamt

European Patent Office

Office européen des brevets

(19)

(11) Veröffentlichungsnummer: **0 350 001**

**A2**

(12)

# EUROPÄISCHE PATENTANMELDUNG

(21) Anmeldenummer: **89112257.4**

(51) Int. Cl.⁴: **G01C 17/04**

(22) Anmeldetag: **05.07.89**

(30) Priorität: **06.07.88 DE 3822876**

(43) Veröffentlichungstag der Anmeldung:
**10.01.90 Patentblatt 90/02**

(84) Benannte Vertragsstaaten:
**AT BE CH ES FR GB GR IT LI LU NL SE**

(71) Anmelder: **Wagner, Ernst**
**Schleusenstrasse 11**
**D-6000 Frankfurt am Main(DE)**

(72) Erfinder: **Wagner, Ernst**
**Schleusenstrasse 11**
**D-6000 Frankfurt am Main(DE)**

(74) Vertreter: **Meier, Robert, Dipl.-Ing.**
**Patentanwalt Dipl.-Ing. Robert Meier Auf dem**
**Mühlberg 16**
**D-6000 Frankfurt am Main 70(DE)**

(54) **Nordrichtunsanzeiger.**

(57) Ein Nordrichtungsanzeiger mit einem länglichen Gehäuse, das eine transparente Sichtseite und eine dieser gegenüberliegende Wand aufweist, an der eine in das Gehäuse hineinragende Spitze sitzt, auf der eine Kompaßnadel leichtgängig gelagert ist, ist so ausgebildet, daß das längliche Gehäuse des Nordrichtungsanzeigers ein an beiden Enden verschließbares Röhrchen ist, und daß wenigstens an einem Ende ein Stopfen als Verschluß für die Röhrchenöffnung verwendet wird, durch die - vor dem Verschließen des Röhrchens - die mit einer Nabe versehene Kompaßnadel mittels einer Einführhilfe in das Röhrchen einschiebbar ist.

Fig.1a

Fig.1

EP 0 350 001 A2

# Nordrichtungsanzeiger

Die Erfindung bezieht sich auf einen Nordrichtungsanzeiger mit einem länglichen Gehäuse, das eine transparente Sichtseite und eine dieser gegenüberliegende Wand aufweist, an der eine in das Gehäuse hineinragende Spitze sitzt, auf der eine Kompaßnadel leichtgängig gelagert ist.

Kompasse sind seit Jahrhunderten bekannt. Ihr wesentlicher Bestandteil ist eine leichtgängig auf einer Spitze gelagerte Kompaßnadel, die in einem Gehäuse oberhalb einer Windrose oder Skaleneinteilung verschwenkbar ist. Die Skaleneinteilung und damit auch das Gehäuse besitzen eine Grundfläche, die der von der Kompaßnadel überstrichenen Kreisfläche entspricht.

Im Laufe der Zeit sind unter Beibehaltung dieser Grundabmessungen unterschiedliche Konstruktionen von Kompassen entwickelt worden. Man unterscheidet normale Kompasse zum Richtungsanzeigen beispielsweise bei Wanderungen von oft recht aufwendig gestalteten Marschkompassen, die mit einer Visiereinrichtung kombiniert sind, mit der sog. Marschzahlen festgelegt werden können.

Bekannt geworden sind auch Ingenieurkompasse und Grubenkompasse.

Ein große Anwendung fanden jahrhundertelang die Kompasse auf Schiffen, um auf den Weltmeeren die Nordrichtung ermitteln zu können. Bis auf wenige Ausnahmen sind diese Schiffskompasse in letzter Zeit jedoch durch Kreiselkompasse ersetzt worden. Vielfach wird der Kompaß auch entbehrlich, wenn das Schiff eine Radar- oder eine Satelitenpeilanlage an Bord hat.

In allen Fällen hinderte die bisherige Gestaltung, Größe und Form die Konstrukteure daran, einen Kompaß mit einem Gebrauchsgegenstand zu kombi nieren. Eine Kompaßnadel benötigt eine Mindestlänge, damit sie eine hinreichende Richtstabilität hat. Zwar sind im Durchmesser kleine Kompaßgehäuse mit winzigen Kompaßnadeln bekannt geworden, die beispielsweise in Verbindung mit Gebrauchsgegenständen angeboten wurden, die auf die Länge von 1 cm reduzierten Kompaßnadeln neigen jedoch dazu, bei geringsten Störfeldern in Rotation zu geraten. Mit ihnen ist sicher die Nordrichtung nicht bestimmbar. Um diesem Mangel abzuhelfen, ist ein abgewandelter Nordrichtungsanzeiger vorgeschlagen worden, bei dem die Kompaßnadel von hinreichender Länge in einem länglichen Gehäuse angeordnet ist (JP 61.26 815 A in: Patent Abstracts of Japan, P-470 21.6.1986, Vol. 10, No. 177).

Nachteilig ist, daß das längliche Gehäuse als Kasten mit rechtwinklig aus der Bodenfläche hervorgehenden Wänden ausgebildet ist. Innerhalb dieses Kastens ist die Magnetnadel einfach auf einer Spitze gelagert, derart, daß sie bei ungeschickter Bewegung von dieser Spitze in das Gehäuse fällt. Der Kasten selbst ist mittels eines Deckels verschlossen. Wie dieses Verschließen jedoch vor allem maschinell zu geschehen hat, ist nicht angegeben.

Hier setzt die Erfindung ein. Ihr liegt die Aufgabe zugrunde, den Nordrichtungsanzeiger mit länglichem Gehäuse so zu verbssern, daß er nicht nur preisgünstig herzustellen, sondern auch einfach mit zahlreichen Gebrauchsgegenständen kombinierbar ist, ohne daß seine Funktionsweise gestört wird.

Diese Aufgabe wird in verblüffend einfacher Weise dadurch gelöst, daß das längliche Gehäuse des Nordrichtungsanzeigers ein an beiden Enden verschließbares Röhrchen ist, und daß wenigstens an einem Ende ein Stopfen als Verschluß für die Röhrchenöffnung verwendet wird, durch die - vor dem Verschließen des Röhrchens - die mit einer Nabe versehene Kompaßnadel mittels einer Einführhilfe in das Röhrchen einschiebbar ist.

Das längliche Gehäuse ist als ein an beiden Enden verschließbares Röhrchen ausgebildet. Derartige Röhrchen sind in beliebiger Querschnittskonfiguration durch Strangpressen in beliebiger Länge herstellbar. Von diesen stranggepressten Rohren können einfach die Röhrchen in der gewünschten Länge ab geschnitten werden. Dieses Abschneiden wird mit solchen Werkzeugen vorgenommen, daß ein Weiterbearbeiten der Schnittkanten nicht erforderlich ist. Die stranggepressten Grundprodukte für die Röhrchen. können, wie die eingereichten Unterlagen erkennen lassen, aus Glas oder Kunststoff bestehen.

Ein Ende des zunächst an beiden Seiten offenen Röhrchens kann durch einen transparenten Verschluß verschlossen werden. Jeweils ein Ende oder beide Enden werden durch Stopfen verschlossen. Wenigstens einer dieser Stopfen kann, wie dieses die eingereichten Unterlagen erkennen lassen, aus elastischem Material bestehen.

Vor dem Verschließen des Röhrchens wird die Magnetnadel in das Röhrchen eingesetzt. Dieses Einsetzen erfolgt mittels einer Einführhilfe.

Die Art der Kombination der Magnetnadel mit dem Röhrchen ist in den Ansprüchen 2, 3 sowie 4 gekennzeichnet. Sowohl der Querboden in Verbindung mit der Platte wie auch das Montagegerät können als Einführhilfen benutzt werden.

Zur Einordnung des Röhrchens genügt es, daß man dieses solange bewegt, bis die Kompaßnadel in dem Röhrchen frei schwingen kann und sich unbehelligt durch die Seitenwände frei in die Nordrichtung einstellt. Die Genauigkeit dieser Nordrichtungsbestimmung ist genauso groß wie diejenige, die man mit bisherigen Kompassen erreicht.

Weitere konstruktive Einzelheiten des Röhrchens und seiner Verbindung mit Gebrauchsgegenstand sind in den Ansprüchen 2 bis 11 gekennzeichnet. Praktisch können die Röhrchen nach der Erfindung je nach Einsatz jeden beliebigen sinnvollen Außen- bzw. Innenquerschnitt aufweisen. Es ist möglich, sie aus jedem nichtmagnetischen Material herzustellen. Wichtig ist, daß die Sichtseite vollständig, zumindest aber soweit aus transparentem Material besteht, daß der Einschwingvorgang der Kompaßnadel innerhalb des Röhrchens beobachtet werden kann.

Wenn der erfindungsgemäße Nordrichtungsanzeiger als Soloinstrument eingesetzt wird, läßt sich unter Verwendung einer Armband- oder Taschenuhr sehr leicht feststellen, wo die anderen Himmelsrichtungen liegen. Hat man mit dem erfindungsgemäßen Nordrichtungsanzeiger die Nordrichtung ermittelt, und beispielsweise einen Markierungspunkt vom Standpunkt aus in Nordrichtung anvisiert, kann man das Zifferblatt einer Uhr so einrichten, daß die zwölf in die Nordrichtung zeigt. Die drei des Zifferblattes weist dann nach Osten, die sechs nach Süden und die neun nach Westen. Dazwischen lassen sich die Richtungen in Übereinstimmung mit der Minutenanzeige des Zifferblattes ermitteln. Eine Minute entspricht genau 6° der Kompaßrose.

Der Nordrichtungsanzeiger kann auch mit einer Visiereinrichtung kombiniert sein, deren Einzelheiten in den Ansprüchen 6 bis 8 gekennzeichnet sind. Die Karte mit der Kompaßrose kann auf ihrer Rückseite eine Gebrauchsanweisung des erfindungsgemäßen Nordrichtungsanzeigers oder andere Informationen enthalten.

Der Nordrichtungsanzeiger kann beispielsweise auch mit der Krücke eines Spazierstockes oder eines Regenschirmes so kombiniert werden, daß er in diese Krücke integriert wird.

Ausführungsbeispiele der Erfindung werden nachfolgend anhand der Zeichnungen erläutert. Er zeigt:

Fig. 1 ein erstes Ausführungsbeispiel der Erfindung in Seitenansicht,

Fig. 1a einen Querschnitt durch Fig. 1 entlang der Linie IA/IA,

Fig. 2 das Ausführungsbeispiel nach Fig. 1 in Draufsicht,

Fig. 3a eine Draufsicht auf ein weiteres Ausführungsbeispiel der Erfindung,

Fig. 3b, d eine Seitenansicht einen Querschnitt des Ausführungsbeispieles nach Fig. 1 mit einm Steckzapfen,

Fig. 3c schematisch einen Teil eines Gerätes mit einem Einsteckkanal für den Steckzapfen gemäß Fig. 3b,

Fig. 4a eine Seitenansicht eines Montagegerätes,

Fig. 4b die Draufsicht auf das Montagegerät nach Fig 4a,

Fig. 5 einen Querschnitt durch einen Nordrichtungsanzeiger mit einem kreisförmigen Querschnitt,

Fig. 6 einen Querschnitt durch einen Nordrichtungsanzeiger mit ovalem Querschnitt,

Fig. 7 einen Querschnitt durch einen Nordrichtungsanzeiger mit viereckigem Querschnitt,

Fig. 8 eine perspektivische Teilansicht eines Konstruktionsdetails,

Fig. 9 eine Draufsicht auf eine spezielle Kompaßnadel,

Fig. 10a-d die Kombination eines Gebrauchsgegenstandes mit einem erfindungsgemäßen Nordrichtungsanzeiger und einer Visiereinrichtung,

Fig. 11 die Draufsicht auf die Visiereinrichtung im Gebrauchszustand,

Fig. 12a schematisch eine Seitenansicht der Krücke eines Regenschirmes bzw. eines Spazierstockes mit der erfindungsgemäßen Nordrichtungsanzeige,

Fig. 12b einen Querschnitt durch Fig. 12a entlang der Linie XIIB/XIIB,

Fig. 12c eine Draufsicht auf die Anordnung nach Fig. 12a

Fig. 13 schematisch die Kombination eines Nordrichtungsanzeigers mit einem Feuerzeug und

Fig. 14a - c die Kombination der Erfindung mit einem Schmuckstück.

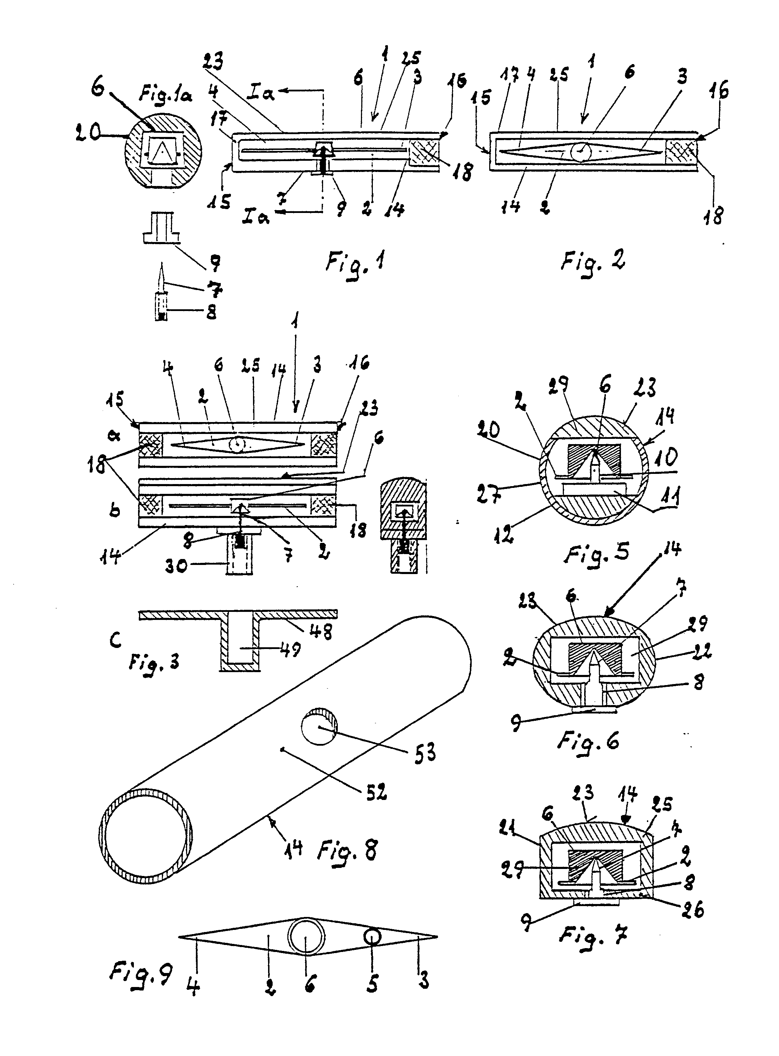

Die Fig. 1, 1a und 2 zeigen ein erstes Ausführungsbeispiel eines Nordrichtungsanzeigers 1. Eine Kompaßnadel 2 mit einem Nordende 3 und einem Südende 4 sowie einer Nabe 6 ist auf einer Spitze 7 gelagert, die im dargestellten Ausführungsbeispiel Bestandteil einer Madenschraube 8 ist. Die Kompaßnadel 2 ist leicht drehbar auf der Spitze 7 innerhalb eines Röhrchens 14 angeordnet, dessen Innenraum nur eine bestimmte minimale Verschwenkung der Kompaßnadel 2 um die Spitze 7 zuläßt, wie dieses vor allem die Fig. 2 darstellt. Das Röhrchen 14 hat ein Ende 15, welches aus dem gleichen Material wie das Röhrchen 14 besteht und ein Ende 16, welches mit einem elastischen Stopfen 18 verschlossen ist. Durch die Sichtseite 23 des Röhrchens 14, welches aus transparentem Material 25 besteht, kann die Kompaßnadel 2 im Röhrchen beobachtet werden.

In die der Sichtseite 23 gegenüberliegende Wand des Röhrchens 14 ist ein Hohlniet eingebracht, in welches die Madenschraube 8, deren Bestandteil die Spitze 7 ist, eingeschraubt ist. Durch das Einschrauben weitet sich das Hohlniet so aus, daß durch diese Befestigungsart ein fester Sitz der Madenschraube im Röhrchen 14 sichergestellt ist. Falls erforderlich, kann die Madenschraube 8 innerhalb des Hohlniets 9 noch durch einen Tropfen Klebstoff befestigt sein.

Deutlich ist vor allem den Fig. 1 und 1a zu entnehmen, daß in keiner Lage des Röhrchens 14 die Kompaßnadel 2, insbesondere ihre Nabe 6, sich so von der Spitze 7 trennen kann, daß eine Störung der Bewegungsfreiheit der Kompaßnadel 2 innerhalb des Röhrchens 14 zu befürchten ist.

Das Röhrchen ist feuchtigkeitsdicht verschlossen, um eine Feuchtigkeitsaufnahme aus der Atmosphäre zu verhindern. Der elastische Stopfen 18 gibt die Sicherheit, daß auch bei unterschiedlicher Wärmeeinwirkung auf das Röhrchen die dabei auftretenden Volumensunterschiede der Luft innerhalb des Röhrchens sicher ausgeglichen werden können. In einem besonderen Ausführungsbeispiel kann das Röhrchen 14 auch mit Flüssigkeit gefüllt sein, die unruhige Bewegungen der Kompaßnadel innerhalb des Röhrchens verhindert.

Fig. 3 zeigt ein weiteres Ausführungsbeispiel eines Nordrichtungsanzeigers 1 nach der Erfindung. Das Röhrchen 14 ist auf beiden Enden 15 und 16 mit je einem elastischen Stopfen 18 verschlossen. Die Spitze 7 ist wieder mittels einer Madenschraube 8 in der der Sichtseite 23 gegenüberliegenden Wand des Röhrchens befestigt. Im dargestellten Ausführungsbeispiel ist diese Befestigung mit einem Steckzapfen 30 kombiniert, der, wie Fig. 3b erkennen läßt, in einen Einsteckkanal 49 eingefügt werden kann, der Bestandteil eines Gebrauchsgegenstandes, beispielsweise eine Richtfunkgerätes 48 ist.

Um das Einführen der Kompaßnadel 2 mit der Nabe 6 in das Röhrchen zu erleichtern, wird ein Montagegerät 54 verwendet, welches in den Fig. 4a und 4b gezeigt ist. Die Seitenansicht dieses Montagegerätes 54 gemäß Fig. 4a zeigt Greifarme 58, die gemäß Fig. 4b je eine Greifklaue 59 tragen und deren entgegengesetzte Enden im Klemmbacken 56 eingelassen sind. Das Montagegerät 54 gleicht prinzipiell einer Wäscheklammer und ist mit einer Feder 55 ausgerüstet und weist Greifenden 57 auf.

Mit den Greifklauen 59 des Montagegerätes 54 wird die Nabe 6 der Kompaßnadel 2 ergriffen und diese in diesem Zustand in das Röhrchen eingeführt. Daraufhin wird die Madenschraube 8 in das vorher applizierte Hohlniet eingeschraubt, bis die Spitze 7 auf das in der Nabe 6 befindliche Drehlager der Kompaßnadel 2 trifft. Daraufhin wird das Montagegerät 54 zurückgezogen, die Madenschraube, gegebenenfalls durch einen Tropfen Kleber, befestigt und das Röhrchen 14 mit einem oder zwei elastischen Stopfen 18 verschlossen.

Der Querschnitt des Röhrchens kann beliebig ausgebildet sein, wenn nur erreicht wird, daß die Kompaßnadel 2 in dem Röhrchen hinreichend Bewegungsfreiheit hat. Das Röhrchen 14 gemäß Fig.

1, 1a und 2 hat kreisförmigen Querschnitt. Fig. 5 zeigt einen Querschnitt eines Röhrchens, welches als Kreiszylinder 20 ausgebildet ist. Der gemäß Fig. 5 untere Bereich dieses Röhrchens 20 besteht aus Messing 27, wohingegen der obere Bereich aus transparentem Material besteht und als Lupe 28 ausgebildet ist. Durch eine derartig ausgebildete Sichtseite 23 kann die Kompaßnadel 2 vergrößert gesehen werden.

In Fig. 5 ist ein zweites Ausführungsbeispiel einer Befestigung für die Spitze 10 dargestellt. Diese endet in einer Platte 11, welche auf einem Querboden 12 befestigt ist. Diese Konstruktion läßt es zu, Querboden 12 mit Platte 11 und Spitze 10 sowie der aufgesetzten Nabe 6 der Kompaßnadel 2 außerhalb des Röhrchens als Baueinheit zu montieren und danach in das Röhrchen 14 einzuschieben. Im Röhrchen können auf einfacher Weise Gleitschienen für den Querboden 12 installiert sein, die nicht nur zum leichten Einschieben des Querbodens 12 dienen, sondern an denen dieser auch beispielsweise mittels Kleber nach dem Einschieben befestigt werden kann.

Fig. 6 zeigt ein Röhrchen 14 mit ovalem Querschnitt 22 und viereckigem Innenquerschnitt 29. Die Spitze 7 ist auf die bereits in Verbindung mit den Fig. 1, 1a und 2 beschriebene Weise in der der Sichtseite 23 des Röhrchens 14 gegenüberliegenden Wand beschrieben.

Fig. 7 zeigt ein Röhrchen 14 mit viereckigem Außenquerschnitt 21 und ebenfalls viereckigem Innenquerschnitt 29. Die Sichtseite 23 dieses Röhrchens 14 besteht aus transparentem Material 25, wohingegen der untere Teil des Röhrchens 14 aus undurchsichtigem Material 26 besteht.

Die Lupe 28 kann auf die entsprechenden Ränder des aus Messing 27 bestehenden Röhrchens 14 aufgeklebt sein. Ebenso kann das transparente Material 25 auch im unteren undurchsichtigen Material 26 des Röhrchens 14 aufgeklebt sein.

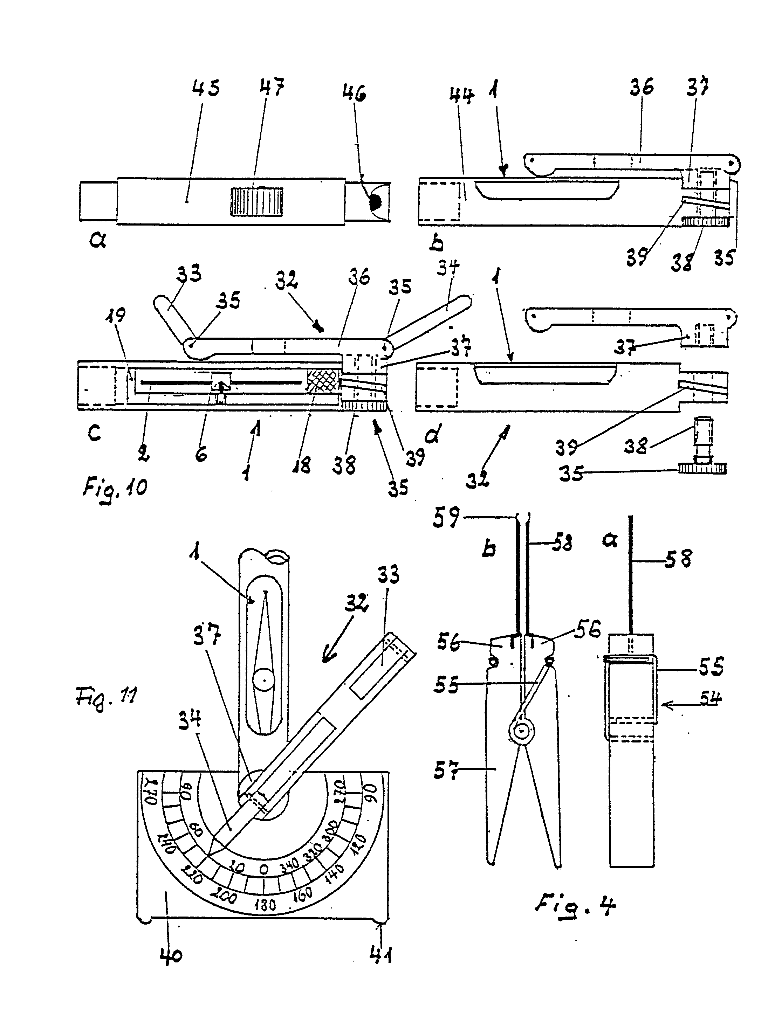

Fig. 8 zeigt ein Röhrchen 14 aus undurchsichtigem Material 26, welches Bestandteil eines mir 52 bezeichneten Schmuckstückes sein kann. Innerhalb dieses Röhrchens 14 ist eine Kompaßnadel 2 untergebracht, die auf einem Ende eine Markierung 5 beispielsweise aus Leuchtfarbe trägt. Im montierten Zustand ist diese Markierung 5 unterhalb eines durchsichtigen Bereiches 53 im Schmuckstück 52 angeordnet. Immer dann, wenn die Kompaßnadel 2 eingenordet ist, erscheint die Markierung 5 mit der Leuchtfarbe unterhalb des durchlässigen Bereiches 53. (Fig. 9)

Das nur schematisch angegebene Schmuckstück 52 kann jede beliebige sinnvolle Form aufweisen.

Im Ausführungsbeispiel nach Fig. 10 kann ein erfindungsgemäßer Nordrichtungsanzeiger 1 in einer Kappe 44 untergebracht sein, die im dargestellten Ausführungsbeispiel auf beiden Seiten einer kleinen Stabtaschenlampe 45 gesteckt werden kann. Ohne am Kern der Erfindung etwas zu ändern, kann die Kappe 44 aber auch so konstruiert sein, daß sie beispielsweise in Verbindung mit einem Kugelschreiber o.dgl., der nicht dargestellt ist, zum Einsatz kommen kann. Die Stabtaschenlampe 45 weist eine Glühbirne 46 sowie einen Ein/Ausschalter 47 auf. Wird die Kappe 44 auf das linke Ende der Stablampe 45 gesteckt, kann diese als Taschenlampe verwendet werden.

Das eine Ende des Nordrichtungsanzeigers 1, aber auch das eine Ende der Kappe 44 kann min einem Clip 36 verbunden sein. Im dargestellten Ausführungsbeispiel gemäß Fig. 10b ist der Clip 36 mittels eines Schwenkkopfes 37 und einer Schraube 38 an der Kappe 44 befestigt. Der Schwenkkopf 37 und die Schraube 38 gehören zu einem Drehgelenk 35.

Fig. 10c zeigt schematisch einen Querschnitt durch die Kappe 44. In der Kappe 44 ist der Nordrichtungsanzeiger 1 angeordnet, der mit einem transparenten Verschluß 19 versehen ist, so daß der Schein der Glühbirne 46 in das Innere des Röhrchens gelangen kann, um auch bei Nacht die Kompaßnadel beobachten zu können. Das dem transparenten Verschluß 19 gegenüberliegende Ende des Röhrchens ist mit einem elastischen Stopfen 18 verschlossen.

Deutlich läßt Fig. 10c erkennen, daß am Clip 36 mittels weiterer Drehgelenke 35 die Bestandteile der Visiereinrichtung 32, nämlich eine Kimme 33 und ein Korn 34 beiklappbar befestigt sind.

Fig. 11 zeigt in Draufsicht die Kimme 33 im beigeklappten und das Korn 34 im aufgeklappten Betriebszustand.

Mit der Schraube 38 läßt sich der Schwenkkopf 37 zur Verdrehung lockern und in der eingestellten Stelle arretieren.

Im Drehgelenk 35 ist ein schräger Halteschlitz 39 vorgesehen, der zur Aufnahme einer Karte 40 mit einer Kompaßrose dient. Diese Karte ist mit Eckansätzen 41 ausgestattet, so daß die Stabtaschenlampe 45 und die eingesteckte Karte 40 mit Kompaßrose dem Nordrichtungsanzeiger 1 während des Gebrauches einen sicheren Halt geben. Die Visiereinrichtung 32 kann nun - vergleichbar mit derjenigen eines Marschkompasses - um den Schwenkkopf 37 herum eingestellt werden, um eine bestimmte Himmelsrichtung festzustellen.

Die Fig. 12a - c zeigen eine weitere Kombinationsmöglichkeit des erfindungsgemäßen Nordrichtungsanzeigers 1 mit einem Gebrauchsgegenstand.

Dieser Gebrauchsgegenstand ist eine Krücke 51 eines Regenschirmes bzw. eines Handstockes. Die entlang der Linie XIIb/XIIb dargestellte Querschnittsanordnung gemäß Fig. 12b eines Nordrichtungsanzeigers 1 ist so in die Krücke eines Handstockes bzw. eines Regenschirmes eingepaßt, daß sehr leicht das Spiel der Kompaßnadel 2 im Röhrchen 14 beobachtet werden kann. Die Sichtseite 23 des Nordrichtungsanzeigers 1 kann wiederum als Lupe ausgebildet sein.

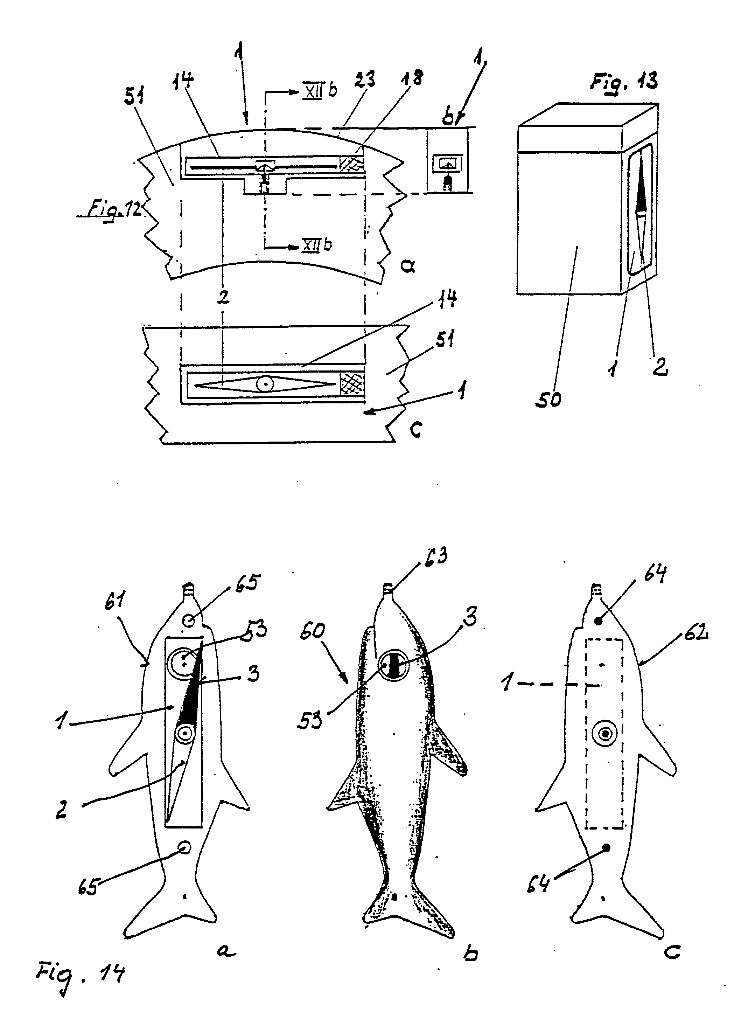

Fig. 13 schließlich zeigt die Kombination eines Nordrichtungsanzeigers 1 mit einem Feuerzeug 50, wobei darauf geachtet werden muß, daß im oder am Feuerzeug keine das Magnetfeld der Erde störenden Eisen- bzw. Metallteile angeordnet sein dürfen.

Nach Maßgabe der Erfindung ist es möglich, den Nordrichtungsanzeiger 1 mit zahlreichen Gebrauchs- bzw. Schmuckgegenständen zu verbinden, ohne daß hierauf im einzelnen weiter eingegangen zu werden braucht.

In Fig. 14b ist ein als Fisch ausgeführtes Schmuckstück 60 dargestellt, welches aus einer ersten Hälfte 61 und einer zweiten Hälfte 62 mittels der Stifte 64 und der Öffnungen 65 zusammengefügt, vorzugsweise geklebt ist. Das Schmuckstück 60 kann aus biegefestem Material, beispielsweise Kunst stoff bestehen. Die erste Hälfte 61 nimmt den Nordrichtungsanzeiger 1 auf, der auch in die zweite Hälfte 62 einpaßbar ist. Im vorderen Bereich des aus undurchsichtigem Material bestehenden Fisches ist ein durchsichtiger Bereich 53 eingelassen, durch den ein Ende der Kompaßnadel 2, z.B. das Nordende 3 sichtbar ist, wenn der Fisch eingenordet ist. Unter dem durchsichtigen Bereich kann auf der Kompaßnadel 2 auch die auf diesen aufgebrachte Markierung 5 sichtbar werden. Durch eine Öse 63 kann beispielsweise eine Kette gezogen werden.

Liste der verwendeten Bezeichnungen

    1 Nordrichtungsanzeiger
    2 Kompaßnadel
    3 Nordende
    4 Südende
    5 Markierung
    6 Nabe
    7 Spitze
    8 Madenschraube
    9 Hohlniet
    10 Spitze
    11 Platte
    12 Querboden
    13
    14 Röhrchen
    15 Ende
    16 Ende
    17 geschlossenes Ende
    18 elastischer Stopfen
    19 transparenter Verschluß
    20 Kreiszylinder

21 viereckiger Querschnitt
22 ovaler Querschnitt
23 Sichtseite
24
25 transparentes Material
26 undurchsichtiges Material
27 Messing
28 Lupe
29 Innenquerschnitt
30 Steckzapfen
31 transparenter Bereich
32 Visiereinrichtung
33 Kimme
34 Korn
35 Drehgelenk
36 Clip
37 Schwenkkopf
38 Schraube
39 Halteschlitz
40 Karte mit Kompaßrose
41 Eckansatz
42
43
44 Kappe
45 Stabtaschenlampe
46 Glühbirne
47 Ein/Ausschalter
48 Richtfunkgerät
49 Einsteckkanal
50 Feuerzeug
51 Krücke
52 Schmuckstück
53 durchsichtiger Bereich
54 Montagegerät
55 Feder
56 Klemmbacke
57 Griffende
58 Greifarm
59 Greifklaue
60 Schmuckstück
61 erste Hälfte
62 zweite Hälfte
63 Öse
64 Stift
65 Öffnung

**Ansprüche**

1. Nordrichtungsanzeiger mit einem länglichen Gehäuse, das eine transparente Sichtseite und eine dieser gegenüberliegende Wand aufweist, an der eine in das Gehäuse hineinragende Spitze sitzt, auf der eine Kompaßnadel leichtgängig gelagert ist, dadurch gekennzeichnet,
daß das längliche Gehäuse des Nordrichtungsanzeigers (1) ein an beiden Enden (15, 16) verschließbares Röhrchen (14) ist, und daß wenigstens an einem Ende ein Stopfen (18) als Verschluß für die Röhrchenöffnung verwendet wird, durch die - vor dem Verschließen des Röhrchens - die mit einer Nabe (6) versehen Kompaßnadel (2) mittels einer Einführhilfe (12, 54) in das Röhrchen (14) einschiebbar ist.

2. Nordrichtungsanzeiger nach Anspruch 1, dadurch gekennzeichnet, daß die Spitze (7) für die Nabe (6) der Kompaßnadel (2) Bestandteil einer Madenschraube (8) ist, die von außen in ein in die der Sichtweite (23) gegenüberliegende Wand des Röhrchens (14) eingesetztes Hohlniet (9) eingeschraubt ist.

3. Nordrichtungsanzeiger nach Anspruch 2, dadurch gekennzeichnet, daß die Außenseite der Madenschraube (8) und/oder des Hohlniets (9) mit einem Steckzapfen (20) zum Befestigen in einem Einsteckkanal (49) kombiniert ist, der Bestandteil eines Gebrauchs- oder Schmuckgegenstandes (45, 46, 50, 51, 52) ist.

4. Nordrichtungsanzeiger nach Anspruch 1, dadurch gekennzeichnet, daß die Spitze (10) für die Nabe (6) der Kompaßnadel (2) auf einer Platte (11) sitzt, die auf einem Querboden (12) befestigt ist, der zusammen mit der Kompaßnadel (2) als vorgefertigte Baueinheit in das Röhrchen (14) einschiebbar ist.

5. Nordrichtungsanzeiger nach den Ansprüchen 1 bis 4, dadurch gekennzeichnet, daß das Röhrchen (14) des Nordrichtungsanzeigers (1) an einem Ende (15 oder 16) einen transparenten Verschluß (19) aufweist, der mit einer Lichtquelle (45) in Wirkverbindung steht.

6. Nordrichtungsanzeiger nach Anspruch 5, dadurch gekennzeichnet, daß das Röhrchen (14) mit dem transparenten Verschluß (19) in einer Kappe (44) untergebracht ist, deren eines Ende auf eine kleine Stabtaschenlampe (45) aufsteckbar ist, und deren anderes Ende mit einer Visiereinrichtung (32) bestehend aus Kimme (33) und Korn (34) kombiniert ist, die einen Halteschlitz (39) für eine Karte (40) mit Kompaßrose einschließt.

7. Nordrichtungsanzeiger nach Anspruch 6, dadurch gekennzeichnet, daß Kimme (33) und Korn (34) der Visiereinrichtung (32) mittels Drehgelenken (35) ausklappbar an einem Clip (36) der Kappe (44) angeordnet sind.

8. Nordrichtungsanzeiger nach den Ansprüchen 6 und 7, dadurch gekennzeichnet, daß die Visiereinrichtung (32) auf einem Schwenkkopf (37) sitzt, der mittels einer Schraube (38) verschwenkbar an der Kappe (44) befestigt ist.

9. Nordrichtungsanzeiger nach einem der Ansprüche 1 bis 5, dadurch gekennzeichnet, daß das Röhrchen (14) des Nordrichtungsanzeigers (1) in der Krücke (5) eines Spazierstockes bzw. eines Regenschirmes angeordnet ist, und daß die Sichtseite (23) des Röhrchens (14) der Form der Krücke (51) angepaßt ist.

10. Nordrichtungsanzeiger nach einem oder mehreren der vorangehenden Ansprüche 1 bis 5, dadurch gekennzeichnet, daß ein Ende (3, 4) der Kompaßnadel (2) mit einer Markierung (5) aus Leuchtfarbe versehen ist, und daß das Röhrchen (14) aus einem undurchsichtigen Material (26) besteht, welches über der Markierung (5) mit einem transparenten Bereich (31) von der Größe der Markierung (5) versehen ist.

11. Nordrichtungsanzeiger nach Anspruch 10, dadurch gekennzeichnet, daß das Röhrchen (14) des Nordrichtungsanzeigers (1) so in einem mit einem durchsichtigen Bereich (53) versehenen Schmuckstück (60) untergebracht ist, daß die transparenten Bereiche (31) des Röhrchens (14) und (53) des Schmuckstückes (60) zur Deckung kommen.

Fig.1a

Fig. 1

Fig. 2

Fig. 3

Fig. 5

Fig. 6

Fig. 7

Fig. 8

Fig.9

Fig. 10

Fig. 11

Fig. 4

Fig. 12

Fig. 13

Fig. 14